# EUROPÄISCHE PATENTSCHRIFT

(11) **EP 1 203 687 B1**
(45) Veröffentlichungstag und Bekanntmachung des Hinweises auf die Patenterteilung: **22.12.2004**
(21) Anmeldenummer: 01124031.4
(22) Anmeldetag: 09.10.2001
(51) Int. Cl.: B60K 41/20, B60K 23/08

(54) **Steuersystem zur variablen Drehmomentverteilung**
Variable torque distribution control system
Système de contrôle de distribution variable du couple

(30) Priorität: 01.11.2000 DE 10054023
(43) Veröffentlichungstag der Anmeldung: 08.05.2002
(73) Patentinhaber: Bayerische Motoren Werke Aktiengesellschaft, 80809 München (DE)
(72) Erfinder: Billig, Christian, 80939 München (DE); Fischer, Gerhard, 80992 München (DE)

(56) Entgegenhaltungen:
- EP-A- 0 311 098
- EP-A- 0 396 323
- EP-A- 0 911 205
- US-A- 5 259 476
- US-A- 5 417 298
- US-A- 6 059 067

## Beschreibung

Die Erfindung bezieht sich auf ein Steuersystem zur variablen Drehmomentverteilung für ein zumindest teilweise vierradgetriebenes Fahrzeug.

Ein derartiges Steuersystem ist beispielsweise in der EP 0 911 205 A2 beschrieben. Bekannt ist demnach eine Drehmomentverteilungseinrichtung zum Verändern des Drehmomentverteilungsverhältnisses zwischen den Rädern der Vorderachse und den Rädern der Hinterachse durch entsprechende Steuerung einer Reibungskupplung als Längssperre. Durch die Festlegung eines Drehmomentverteilungsverhältnisses kann das Fahrverhalten eines Fahrzeuges erheblich beeinflusst werden. Beim Gegenstand der EP 0 911 205 A2 wird die Änderung des Drehmomentverteilungsverhältnisses in Abhängigkeit von der Betätigung des Bremspedals und des Fahrpedals vorgenommen. Hierbei kann das Fahrverhalten lediglich vermutet, nicht jedoch tatsächlich erfasst werden.

Weiterhin sind allradgetriebene Fahrzeuge mit Fahrdynamikregelsystemen in Form von Antriebsmomentregelungssystemen und/oder Bremsmomentregelungssystemen bekannt.

Es ist Aufgabe der Erfindung, ein Steuersystem zum Verändern des Drehmomentverteilungsverhältnisses eingangs genannter Art im Hinblick auf die Genauigkeit und Sicherheit, insbesondere bei Kurvenfahrt, zu verbessern.

Diese Aufgabe wird für verschiedene Ausführungsformen eines vierradgetriebenen Fahrzeuges durch die Merkmale der Patentansprüche 1 bis 3 gelöst.

Erfindungsgemäß weist ein Steuersystem zur variablen Drehmomentverteilung für ein vierradgetriebenes Fahrzeug eine regelbare Längssperre und ein elektronisches Steuergerät auf, das fahrdynamische Größen (z. B. Lenkwinkel, Drehrate, Querbeschleunigung) erfasst, durch die ein Übersteuern bzw. Untersteuern des Fahrzeuges erkennbar ist. Unter dem Begriff vierradgetriebenes Fahrzeug sollen sowohl ein Permanent-Allradfahrzeug als auch ein hinterradangetriebenes Fahrzeug mit über die regelbare Längssperre zuschaltbarem Vorderradantrieb bzw. ein vorderradangetriebenes Fahrzeug mit über die regelbare Längssperre zuschaltbarem Hinterradantrieb verstanden werden. Das Steuergerät regelt die Längssperre im Sinne einer Erhöhung und/oder Reduzierung des von ihr übertragenen Sperrmoments abhängig von der Ausführungsform des zumindest teilweise vierradgetriebenen Fahrzeugs derart, dass das Fahrzeug ausgehend von einem über- bzw. untersteuernden Zustand wieder in den neutralen Zustand gebracht wird. Hierdurch wird die Stabilität des querdynamischen Verhaltens eines vierradgetriebenen Fahrzeuges erheblich erhöht.

Das erfindungsgemäße Steuersystem kann eine Erweiterung bzw. Überlagerung bereits bekannter Fahrdynamikregelsysteme in Form von Antriebsmoment- und Bremsmomentregelsystemen darstellen. Die Erfindung ist dabei vorzugsweise auch zum Teil in ein für die bekannten Fahrdynamikregelsysteme ohnehin vorhandenes Steuergerät integriert.

Durch die erfindungsgemäße Regelung der Sperre findet auch eine Unterstützung eines Fahrdynamikregelsystems im Sinne einer Komfortverbesserung statt, da ein spürbarer Bremseingriff im Falle eines Übersteuerns bzw. ein spürbarer Motoreingriff zur Antriebsmomentreduzierung im Falle eines Untersteuerns später stattfinden kann.

In der Zeichnung ist ein Ausführungsbeispiel der Erfindung dargestellt. Es zeigt
- Fig. 1: schematisch ein vierradgetriebenes Fahrzeug in Form eines hinterradangetriebenen Fahrzeugs mit über eine regelbare Längssperre zuschaltbarem Vorderradantrieb
- Fig. 2: schematisch ein vierradgetriebenes Fahrzeug in Form eines vorderradangetriebenen Fahrzeugs mit über eine regelbare Längssperre zuschaltbarem Hinterradantrieb und
- Fig. 3: schematisch ein vierradgetriebenes Fahrzeug in Form eines Permanent-Allradfahrzeuges mit regelbarer Längssperre zur Änderung der Drehmomentverteilung zwischen Vorder- und Hinterachse.

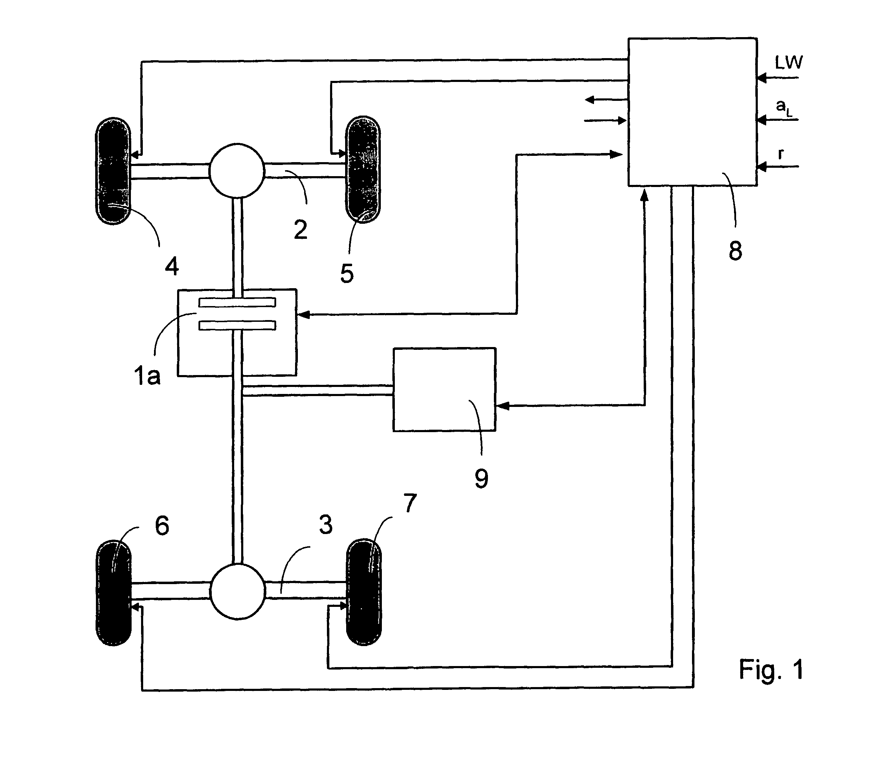

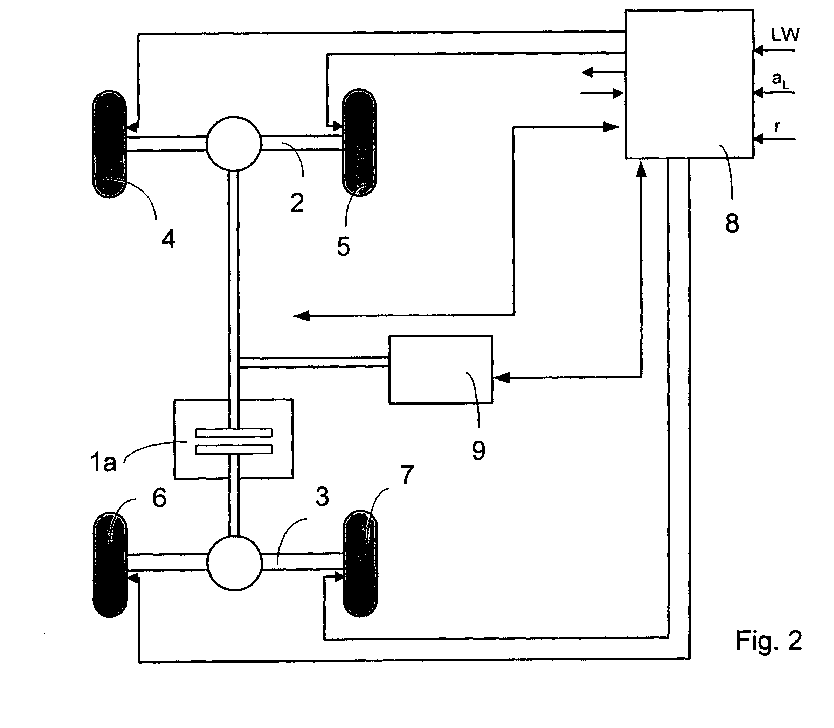

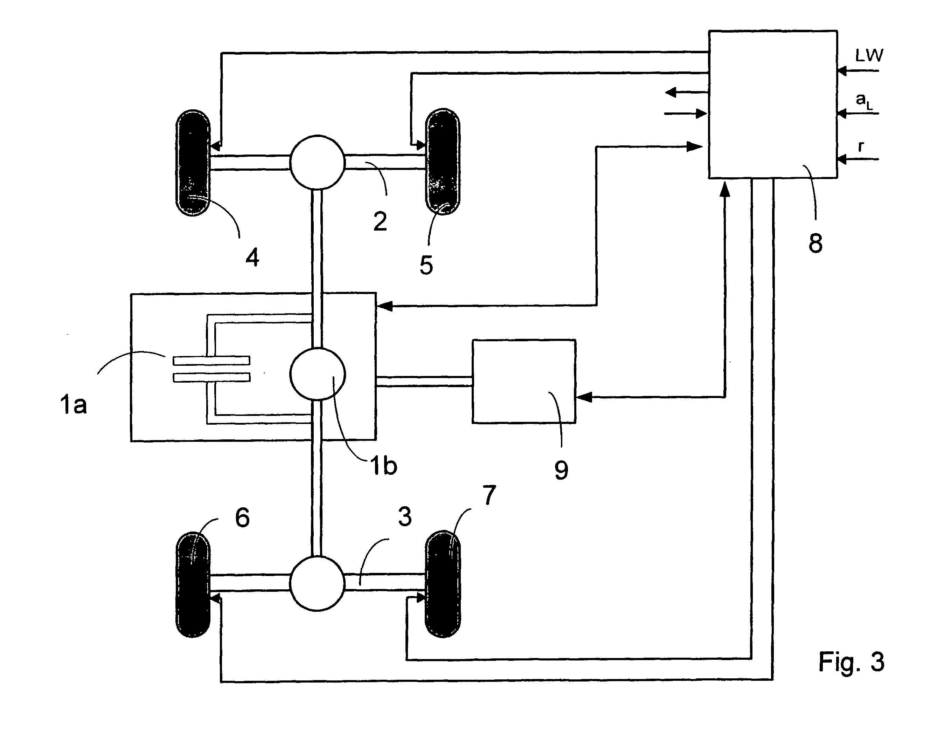

In den Figuren 1 und 2 sind Fahrzeuge mit einer variablen Längssperre 1a in Form einer regelbaren Reibungskupplung, mit je einem Querdifferenzial für die Vorderachse 2 und die Hinterachse 3 sowie mit Rädern 4, 5, 6 und 7 dargestellt. In Fig. 3 ist zusätzlich ein Längsdifferenzial 1b eines Permanent-Allradfahrzeuges dargestellt.

In den Fig. 1 bis 3 treibt eine Antriebseinheit 9, bestehend aus einer Brennkraftmaschine, einem Getriebe und mindestens einem Antriebssteuergerät, über das Längsdifferenzial 1b (soweit vorhanden) und ggf. über die Längssperre 1a die Räder 4 und 5 der Vorderachse 2 und/oder die Räder 6 und 7 der Hinterachse 3 an. Bei einem Fahrzeug nach Fig. 1 wird mit offener Längssperre 1a das gesamte Drehmoment der Antriebseinheit 9 auf die Hinterräder 6, 7 übertragen. Bei einem Fahrzeug nach Fig. 2 wird mit offener Längssperre 1a das gesamte Drehmoment der Antriebseinheit 9 auf die Vorderräder 4, 5 übertragen. Bei einem Fahrzeug nach Fig. 3 ist durch das Längsdifferenzial 1b bei offener Längssperre 1a ein Basis-Drehmomentverteilungsverhältnis eingestellt. Dies bedeutet, dass grundsätzlich gemäß Auslegung des gewünschten Fahrverhaltens beispielsweise über die Vorderachse 2 ca. 40% und über die Hinterachse 3 ca. 60% des gesamten über die Antriebseinheit 9 zur Verfügung gestellten Antriebsmoments übertragen wird.

Grundsätzlich wird die Längssperre 1a mittels eines Steuergerätes 8 eingestellt bzw. abhängig von vorgegebenen fahrdynamischen Situationen, insbesondere bei Kurvenfahrt mit Übersteuer- oder Untersteuerneigung, entsprechend geregelt.

Das Steuergerät 8 in den Fig. 1 bis 3 ist Teil eines Fahrdynamikregelsystems, das eine Längssperrenregelung, eine Bremsregelung und eine Antriebsregelung umfasst. Dazu ist das Steuergerät 8 mit einem Aktuator der regelbaren Kupplung der Längssperre 1a, mit den hier nicht dargestellten Bremsaktuatoren der Räder 4, 5, 6 und 7 und mit dem Antriebssteuergerät der Antriebseinheit 9 verbunden. Das Steuergerät 8 weist vorzugsweise Signaleingänge zur Erfassung von Betriebsparametern des Fahrzeugs auf. Insbesondere werden im Steuergerät 8 die fahrdynamischen Größen, wie der Lenkwinkel LW, die Dreh- bzw. Gierrate r und die Querbeschleunigung a_{y}, erfasst.

Über die fahrdynamischen Größen LW, a_{y} und r berechnet das Steuergerät 8, ob das Fahrzeug die vom Fahrer vorgegebene Bahnkurve stabil durchfährt. Ist beispielsweise der Betrag der gemessenen Ist-Drehrate r höher als eine berechnete erste Soll-Drehrate, wird auf ein Übersteuern des Fahrzeuges geschlossen. Ist beispielsweise der Betrag der gemessenen Ist-Drehrate r geringer als eine berechnete zweite Soll-Drehrate, wird auf ein Untersteuern des Fahrzeuges geschlossen. Die erste und die zweite Soll-Drehrate können auch gleich sein.

Erkennt das Steuergerät 8 in Fig. 1 ein Untersteuern des Fahrzeuges, reduziert es das Sperrmoment der regelbaren Kupplung der Längssperre 1a. Dadurch erhält die Vorderachse 2 mehr Seitenführung. Die Lenkfähigkeit des Fahrzeugs wird verbessert. Das Untersteuern wird auf ein neutrales Fahrverhalten zurückgeführt.

Erkennt das Steuergerät 8 in Fig. 1 ein Übersteuern des Fahrzeuges, erhöht es das Sperrmoment der regelbaren Kupplung der Längssperre 1a. Dadurch übernimmt die Vorderachse 2 mehr Antriebsmoment und entlastet die Hinterachse 3. Die Hinterachse 3 erhält mehr Seitenführung. Das Übersteuern wird auf ein neutrales Fahrverhalten zurückgeführt.

Erkennt das Steuergerät 8 in Fig. 2 ein Untersteuern des Fahrzeuges, erhöht es das Sperrmoment der regelbaren Kupplung der Längssperre 1a. Dadurch übernimmt die Hinterachse 3 mehr Antriebsmoment. Die Hinterachse 3 erhält mehr Seitenführung. Die Lenkfähigkeit des Fahrzeugs wird verbessert. Das Untersteuern wird auf ein neutrales Fahrverhalten zurückgeführt.

Erkennt das Steuergerät 8 in Fig. 2 ein Übersteuern des Fahrzeuges, reduziert es das Sperrmoment der regelbaren Kupplung der Längssperre 1a. Die Vorderachse 2 erhält mehr Seitenführung. Das Übersteuern wird auf ein neutrales Fahrverhalten zurückgeführt.

Erkennt das Steuergerät 8 in Fig. 3 ein Untersteuern oder ein Übersteuern des Fahrzeuges, erhöht es das Sperrmoment der regelbaren Kupplung der Längssperre 1a. Dadurch wird die mechanische Kopplung der Hinterachse 3 und der Vorderachse 2 erhöht. Das Übersteuern oder Untersteuern wird auf ein neutrales Fahrverhalten zurückgeführt.

Diese gezielte erfindungsgemäße Regelung der Längssperre (auch Zentralsperre genannt) in einem allradgetriebenen Fahrzeug kann die durch die Fahrwerksauslegung festgelegte Fahrdynamik eines Fahrzeuges im gesamten Reibwertspektrum deutlich verbessern und ermöglicht zudem die Auslegung in eine gewünschte Richtung (Philosophie: z.B. grundsätzlich mehr in Richtung Übersteuern, mehr in Richtung Untersteuern oder mehr in Richtung Neutral).

## Patentansprüche

1. Steuersystem zur variablen Drehmomentverteilung für ein hinterradangetriebenes Fahrzeug mit einem über eine regelbare Längssperre (1a) zuschaltbarem Vorderradantrieb und mit einem elektronischen Steuergerät (8), das fahrdynamische Größen (LW, a_{y}, r) erfasst, durch die ein Übersteuern bzw. ein Untersteuern des Fahrzeuges erkennbar ist, und das mit der Längssperre (1a) verbunden ist und Mittel aufweist, durch die bei einem Übersteuern die Längssperre (1a) im Sinne einer Erhöhung des von ihr übertragenen Sperrmoments zur Vorderachse (2) hin, bzw. bei einem Untersteuern die Längssperre (1a) im Sinne einer Reduzierung des von ihr übertragenen Sperrmoments zur Vorderachse (2) hin geregelt wird.

2. Steuersystem zur variablen Drehmomentverteilung für ein vorderradangetriebenes Fahrzeug mit über eine regelbare Längssperre (1a) zuschaltbarem Hinterradantrieb und mit einem elektronischen Steuergerät (8), das fahrdynamische Größen (LW, a_{y}, r) erfasst, durch die ein Übersteuern bzw. ein Untersteuern des Fahrzeuges erkennbar ist, und das mit der Längssperre (1a) verbunden ist und Mittel aufweist, durch die bei einem Übersteuern die Längssperre (1a) im Sinne einer Reduzierung des von ihr übertragenen Sperrmoments zur Hinterachse (3) hin, bzw. bei einem Untersteuern die Längssperre (1a) im Sinne einer Erhöhung des von ihr übertragenen Sperrmoments zur Hinterachse (3) hin geregelt wird.

3. Steuersystem zur variablen Drehmomentverteilung für ein Permanent-Allradfahrzeug mit einem Längsdifferenzial (1b), mit einer regelbaren Längssperre (1a) zur Überbrückung des Längsdifferenzials (1b) und mit einem elektronischen Steuergerät (8), das fahrdynamische Größen (LW, a_{y}, r) erfasst, durch die ein Übersteuern bzw. ein Untersteuern des Fahrzeuges erkennbar ist, und das mit der Längssperre (1a) verbunden ist und Mittel aufweist, durch die bei einem Übersteuern bzw. bei einem Untersteuern die Längssperre (1a) im Sinne einer Erhöhung des von ihr übertragenen Sperrmoments geregelt wird.

## Claims

1. A control system for variable torque distribution for a rear wheel drive vehicle comprising a front wheel drive which can be switched on via a centre differential lock (1 a) which can be regulated, and an electronic control device (8) which detects driving dynamic variables (LW, a_{y}, r), by which an oversteer or an understeer of the vehicle can be detected, and which is connected to the centre differential lock (1a) and has means, by which in the event of an oversteer, the centre differential lock (1 a) is regulated in the direction of an increase in the locking power transmitted by it towards the front axle (2), or in the event of an understeer, the centre differential lock (1a) is regulated in the direction of a reduction in the locking power transmitted by it towards the front axle (2).

2. A variable torque distribution control system for a front wheel drive vehicle comprising a rear wheel drive which can be switched on via a centre differential lock (1a) which can be regulated, and an electronic control device (8) which detects driving dynamic variables (LW, a_{y}, r), by which an oversteer or an understeer of the vehicle can be detected, and which is connected to the centre differential lock (1a) and has means by which, in the event of an oversteer, the centre differential lock (1a) is regulated in the direction of a reduction in the locking power transmitted by it towards the rear axle (3), or in the event of an understeer, the centre differential lock (1a) is regulated in the direction of an increase in the locking power transmitted by it towards the rear axle (3).

3. A variable torque distribution control system for a permanent four wheel drive vehicle comprising a centre differential (1b), a centre differential lock (1a) which can be regulated, to bridge the centre differential (1 b) and an electronic control device (8) which detects driving dynamic variables (LW, a_{y}, r), by which an oversteer or an understeer of the vehicle can be detected, and which is connected to the centre differential lock (1a) and has means by which, in the event of an oversteer or in the event of an understeer, the centre differential lock (1 a) is regulated in the sense of an increase in the locking power transmitted by it.

## Revendications

1. Système de commande pour la distribution variable de couples de rotation pour un véhicule à roues motrices arrière, comprenant un entraînement des roues avant pouvant être déclenché par un dispositif de blocage longitudinal réglable (1a) ainsi qu'un appareil de commande électronique (8) mesurant des grandeurs dynamiques de conduite (LW, a_{y,} r) permettant de détecter un survirage ou un sous-virage du véhicule, et qui est relié au dispositif de blocage longitudinal (1a) et présente des moyens par lesquels, lors d'un survirage, le dispositif de blocage longitudinal (1a) est régulé dans le sens d'une augmentation du couple de blocage transmis par celui-ci vers l'essieu avant (2), ou lors d'un sous-virage, le dispositif de blocage longitudinal (1a) est régulé dans le sens d'une réduction du couple de blocage transmis par celui-ci vers l'essieu avant (2).

2. Système de commande pour la distribution variable de couples de rotation pour un véhicule à roues motrices avant, comprenant un entraînement des roues arrière pouvant être déclenché par un dispositif de blocage longitudinal réglable (1a) ainsi qu'un appareil de commande électronique (8) mesurant des grandeurs dynamiques de conduite (LW, a_{y}, r) permettant de détecter un survirage ou un sous-virage du véhicule, et qui est relié au dispositif de blocage longitudinal (1a) et présente des moyens par lesquels, lors d'un survirage, le dispositif de blocage longitudinal (1a) est régulé dans le sens d'une réduction du couple de blocage transmis par celui-ci vers l'essieu arrière (3), ou lors d'un sous-virage, le dispositif de blocage longitudinal (1a) est régulé dans le sens d'une augmentation du couple de blocage transmis par celui-ci vers l'essieu arrière (3).

3. Système de commande pour la distribution variable de couples de rotation pour un véhicule quatre-quatre permanent, comprenant un différentiel longitudinal (1b), un dispositif de blocage longitudinal (1a) pour surmonter le différentiel longitudinal (1b) et un appareil de commande électronique (8) mesurant des grandeurs dynamiques de conduite (LW, a_{y,} r) permettant de détecter un survirage ou un sous-virage du véhicule, et qui est relié au dispositif de blocage longitudinal (1a) et présente des moyens par lesquels, lors d'un survirage ou d'un sous-virage, le dispositif de blocage longitudinal (1a) est régulé dans le sens d'une augmentation du couple de blocage transmis par celui-ci.
